# EUROPÄISCHE PATENTANMELDUNG

(11) **EP 2 586 917 A2**
(43) Veröffentlichungstag der Anmeldung: **01.05.2013**
(21) Anmeldenummer: 12006036.3
(22) Anmeldetag: 24.08.2012
(51) Int. Cl.: E02B 17/00

(54) **Offshore-Plattform-Konstruktion**

(30) Priorität: 28.10.2011 DE 102011117162
(71) Anmelder: RWE Innogy GmbH, 45127 Essen (DE)
(72) Erfinder: Tralle, Jörg, 49088 Osnabrück (DE); Greiner, Sebastian, 20357 Hamburg (DE); Laukner, Tobias, 22305 Hamburg (DE)
(74) Vertreter: Polypatent

(57) **Zusammenfassung**

Die Erfindung betrifft eine Offshore-Plattform-Konstruktion (1) für eine Windkraftanlage mit wenigstens einer Gründungsstruktur und mit wenigstens einem von der Gründungsstruktur aufgenommenen Übergangsstück (3), welches eine Arbeitsplattform (4) bildet und eine Anschlussstruktur über eine auf der Plattform zu errichtende Windkraftanlage aufweist. Die Offshore-Plattform-Konstruktion (1) zeichnet sich dadurch aus, dass das Übergangsstück (3) einen begehbaren Installationstank (7) umfasst, der sich in Einbaulage unterhalb der Arbeitsplattform (4) erstreckt und in welchem Mittel zum Durchführen und Abhängen von Seekabeln (17) vorgesehen ist.

## Beschreibung

Die Erfindung betrifft eine Offshore-Plattform-Konstruktion, insbesondere für eine Windkraftanlage mit wenigstens einer Gründungsstruktur, mit wenigstens einem von der Gründungstruktur aufgenommenen Übergangsstück, welches eine Plattform definiert und welches eine Anschlussstruktur für ein auf der Plattform zu errichtendes Bauwerk aufweist. Ein Bauwerk in diesem Sinne wäre beispielsweise einer Stahl- oder Betonkonstruktion in Form eines Betonmastes mit vorgespannter Bewehrung, dessen von der Gründung abliegendes Ende in bekannter Art und Weise einen Windkraftgenerator aufnimmt.

Offshore-Plattformen der vorbezeichneten Art sind beispielsweise mit Gründungen als sogenannte Monopiles, Tripiles etc. ausgeführt. Die Gründung ist meistens mit einem oder mehreren Gründungspfählen in den Meeresgrund gerammt. Die Gründungspfähle tragen ein Übergangsstück welches eine Plattform, beispielsweise eine Arbeitsplattform definiert und mit einem Ringflansch als Anschlussstruktur für den Betonmast versehen ist.

Offshore-Windgeneratoren sind häufig in Feldern angeordnet, die Windgeneratoren sind miteinander verschaltet und können beispielsweise zunächst feldweise an eine Offshore-Umspannanlage angeschlossen sein. Von der Umspannanlage werden dann entsprechend ausgebildete Seekabel auf dem Meeresgrund an Land geführt.

Die einzelnen Windkraftgeneratoren sind jeweils an dreiadrige Leitungen angeschlossen, die verhältnismäßig schwer und steif sind. Die Leitungen bzw. Kabel sind vom Meeresgrund durch die Bauwerksanschlussstruktur und den Turm/Mast zum Windgenerator zu führen, wobei diese innerhalb des Bauwerks abgehängt werden. Die einzelnen Adern der Leitungen sind in einem gemeinsamen Kabelmantel angeordnet, der diese auf dem Meeresgrund hinreichend gegen äußere Einwirkungen schützt. Darüber hinaus sind die Kabel mit wenigstens einer Geflechtsabschirmung umhüllt und mit einer Armierung. Einzelne Adern haben Querschnitte von bis zu 800 mm² und mehr, so dass sowohl der praktisch mögliche als auch der zulässige Biegeradius der Kabel verhältnismäßig groß ist. Dieser Biegeradius kann bis zu 1,5 m und mehr betragen. Die Kabelführung, Aufhängung und Zugentlastung innerhalb des Bauwerks ist damit verhältnismäßig aufwändig zu bewerkstelligen.

Der Erfindung liegt daher das Problem zugrunde, eine Offshore-Plattform-Konstruktion im Hinblick auf die Durchführung von Seekabeln zu verbessern. Insbesondere soll die Montage der Seekabel besonders einfach sein.

Die Aufgabe wird gelöst durch eine Offshore-Plattform-Konstruktion, insbesondere für eine Windkraftanlage, mit wenigstens einer Gründungsstruktur, mit wenigstens einem von der Gründungsstruktur aufgenommenen Übergangsstück, welches eine Plattform definiert und vorzugsweise eine Anschlussstruktur für ein auf der Plattform zu errichtendes Bauwerk aufweist, wobei sich die Offshore- Plattform-Konstruktion insbesondere dadurch auszeichnet, dass das Übergangsstück wenigstens einen, vorzugsweise begehbaren Installationstank umfasst, der sich in Einbaulage unterhalb der Plattform erstreckt und in welchem Mittel zum Durchführen und Abhängen von Seekabeln vorgesehen sind.

Selbstverständlich kann das Übergangsstück auch ein freiliegendes Deck ohne eine Anschlussstruktur für ein Bauwerk umfassen. Die erfindungsgemäße Lösung ist ohne weiteres auch auf Offshore Öl und Gas Förder- und Explorationsplattformen übertragbar.

Erfindungsgemäß ist ein separater Installationstank/Installationskeller vorgesehen, der sich unterhalb der Plattform erstreckt und der begehbar ist. Innerhalb des Installationstanks können die Seekabel zugfest abgehängt werden und für eine Durchführung zu einem auf der Plattform errichteten Bauwerk gegebenenfalls vereinzelt werden.

Bei einer bevorzugten Variante der Offshore-Plattform-Konstruktion gemäß der Erfindung ist vorgesehen, dass der Installationstank bodenseitig wenigstens eine außermittig vorgesehene Kabeleinführung aufweist.

Die Anordnung einer solchen bodenseitigen Kabeleinführung außermittig, bei einem vorzugsweise mit rundem Querschnitt versehenen Installationstank, trägt dem Umstand Rechnung, dass die Seekabel nur mit einem verhältnismäßig großen Biegeradius vom Meeresgrund aufwärts geführt werden können.

Ein Installationstank gemäß der Erfindung hat vorzugsweise eine lichte Weite von etwa 5 m und eine lichte Höhe von 5 m. Dieser kann bodenseitig etwa 21 m über der Wasserlinie angeordnet sein.

Zweckmäßigerweise ist die Kabeleinführung an wenigstens ein sich unterhalb des Installationstanks erstreckendes J-Rohr angeschlossen, welches eine J-förmige Führung des oder der Seekabel innerhalb des zulässigen Biegeradius ermöglicht.

Besonders zweckmäßig ist es, wenn zur Abhängung von Seekabeln wenigstens ein Kabelklemmsitz in wenigstens einer Kabeleinführung vorgesehen ist. So besteht die Möglichkeit, die Seekabel innerhalb des Installationstanks von ihrer äußeren Ummantelung zu befreien und/oder zu vereinzeln.

Zweckmäßigerweise umfasst der Installationstank wenigstens eine begehbare Arbeitsbühne.

Bei einer besonders bevorzugten Ausführungsform der Offshore-Plattform-Konstruktion gemäß der Erfindung ist vorgesehen, dass innerhalb des Installationstanks wenigstens eine Kabelführung, vorzugsweise in Form einer Leiterbaum-Konstruktion zur Fixierung von vereinzelten isolierten Stromkabeln vorgesehen ist, die sich vorzugsweise über die gesamte lichte Höhe des Installationstanks erstreckt. Eine solche Leiterbaum-Konstruktion kann beispielsweise als Gerüst mit einer Vielzahl von Montagetraversen ausgebildet sein.

Die Kabelführung kann wenigstens eine Kabelbrücke umfassen, die sich bodenseitig von einer Kabeleinführung aus zu einer etwa mittigen Kabelführung erstreckt.

Die Offshore-Plattform-Konstruktion gemäß der Erfindung umfasst vorzugsweise wenigstens eine Schaltanlage, die zweckmäßigerweise oberhalb des Installationstanks auf der Plattform oder innerhalb eines Montageflansches für die Bauwerkskonstruktion angeordnet ist.

Die Erfindung wird nachstehend anhand eines in den Zeichnungen dargestellten Ausführungsbeispiels erläutert.

Es zeigen:
- Fig. 1: eine schematische Schnittansicht einer Offshore-Plattform-Konstruktion gemäß der Erfindung mit in den Installationstank eingezogenen Seekabeln,
- Fig. 2: eine der Fig. 1 entsprechende Ansicht, die die Verlegung der vereinzelten Adern der Seekabel veranschaulicht und
- Fig. 3: eine den Fig. 1 und 2 entsprechende Ansicht mit fertig verlegten und installierten Kabeln.

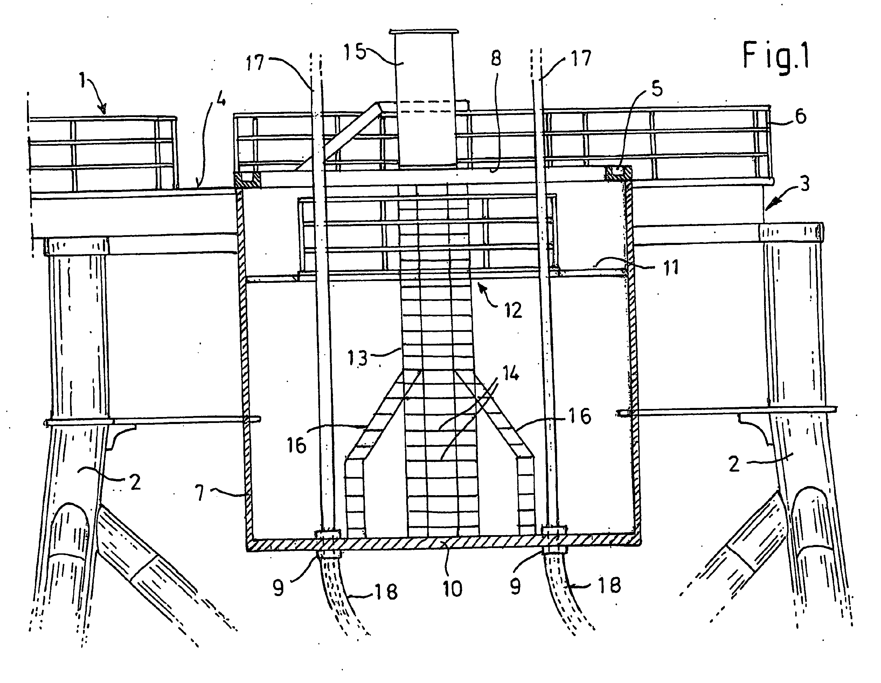

Die in Fig. 1 dargestellte Offshore-Plattform-Konstruktion 1 umfasst mehrere Gründungspfähle 2, die in den Meeresboden gerammt sind sowie ein von diesen ausgenommenes Übergangsstück 3, welches eine Arbeitsplattform 4 definiert. In etwa der Ebene der Arbeitsplattform 4 ist auf dem Übergangsstück ein Ringflansch 5 mit nicht näher dargestellten Befestigungsbolzen zur Sicherung einer Stahlröhre eines Mastes einer Windkraftanlage als Bauwerk vorgesehen.

Die Arbeitsplattform 4 ist in bekannter Art und Weise mit einem Geländer 6 gesichert.

Unterhalb der Arbeitsplattform 4 ist ein begehbarer Installationstank 7 bzw. Installationskeller vorgesehen, der beispielsweise einen Durchmesser von etwa 5 m, eine lichte Höhe von etwa 5 m sowie einen kreisrunden Querschnitt aufweisen kann. Der Installationstank 7 ist Bestandteil des Übergangsstücks 3 und bildet gemäß dem beschriebenen Ausführungsbeispiel eine unterseitige Verlängerung des an den Ringflansch 5 anzuschließenden Bauwerks, beispielsweise einer Betonröhre.

Oberseitig ist der Installationstank 7 mit einem begehbaren Rost 8 abgeschlossen, bodenseitig umfasst der Installationstank einen bis auf mehrere Kabeleinführungen 9 geschlossenen Boden 10.

Mit 11 ist eine Arbeitsbühne bezeichnet, die sich etwa im oberen Drittel des Installationstanks 7 unterhalb des Rostes 8 und parallel dazu erstreckt. Die Arbeitsbühne 11 erstreckt sich randseitig umlaufend und ist mit einer mittigen Durchführung 12 für eine Leiterbaumstruktur 13 versehen. Die Leiterbaumstruktur 13 kann beispielsweise als polygonale Leiterstruktur oder Leitertunnel ausgebildet sein, die sich vom Boden 10 bis zu dem Rost 8 über die gesamte lichte Höhe des Installationstanks 7 erstreckt. Diese Leiterstruktur umfasst Montagetraversen 14 zur Kabelfixierung.

Mit 15 ist ein Schaltschrank bezeichnet, der mittig oberhalb der Durchführung 12 angeordnet ist.

Die Leiterbaumstruktur 13 umfasst weiterhin mehrere Kabelbrücken 16 (die Anzahl der Kabelbrücken 16 ist für die Erfindung nicht kritisch), die ebenfalls als Leiterkonstruktionen mit Montagetraversen 14 ausgeführt sind und die sich brückenartig vom Boden 10 des Installationstanks 7 außermittig im Bereich der Kabeleinführungen 9 in die Mitte der Leiterbaumstruktur 13 erstrecken. Die Leiterbaumstruktur 13 bildet einen von unten nach oben durch den Installationstank 7 durchgehenden Kabelkanal, der in den mittig angeordneten Schaltschrank 15 geführt ist.

Der Installationstank 7 umfasst weiterhin Leitern/Stiege zur Begehung der Arbeitsbühne 11 von der Arbeitsplattform 4 aus sowohl als auch zur Begehung des Bodens 10 des Installationstanks 7. Diese Stiege sind aus Vereinfachungsgründen nicht dargestellt.

Nachstehend wird der Vorgang der Kabeleinführung und Durchführung in den Installationstank 7 gemäß der Erfindung erläutert.

Fig. 1 zeigt zwei durch den Installationstank 7 hindurchgeführte Seekabel 17 in nicht-montiertem und nicht-entmanteltem Zustand. Die Seekabel sind durch an den Boden 10 des Installationstanks 7 angeschlossene J-Rohre 18 über die Kabeleinführungen 9 in den Installationstank 7 geführt. An die Kabeleinführungen 9 sind die J-Rohre 18 von außen abgedichtet angeschlossen.

Die Seekabel 17 werden von der Arbeitsplattform 4 aus mittels spezieller Vorrichtungen (Zugstativen) durch die J-Rohre 18 gerade hoch gezogen. Sind diese über die vorgegebene Länge aus den J-Rohren 18 herausgezogen, werden sie in den Kabeleinführungen 9, die als Klemmsitz für die Seekabel 17 ausgebildet sind, festgelegt. Die Kabeleinführungen 9 können beispielsweise Klemmsitze in Form von Klemmtöpfen und/oder Klemmkeilen aufweisen. Darüber hinaus können auch spindelbetätigbare Klemmbacken innerhalb der Kabeleinführungen 9 verstellbar angeordnet sein.

In dem abgehängten Zustand werden die Seekabel 17 von ihrer äußeren Ummantelung, gegebenenfalls von ihrer Armierung und einer Geflechtsabschirmung befreit. Die Armierung und die Geflechtsabschirmung werden zum Teil zur Fixierung im Bereich der Kabeleinführung 9 verwendet.

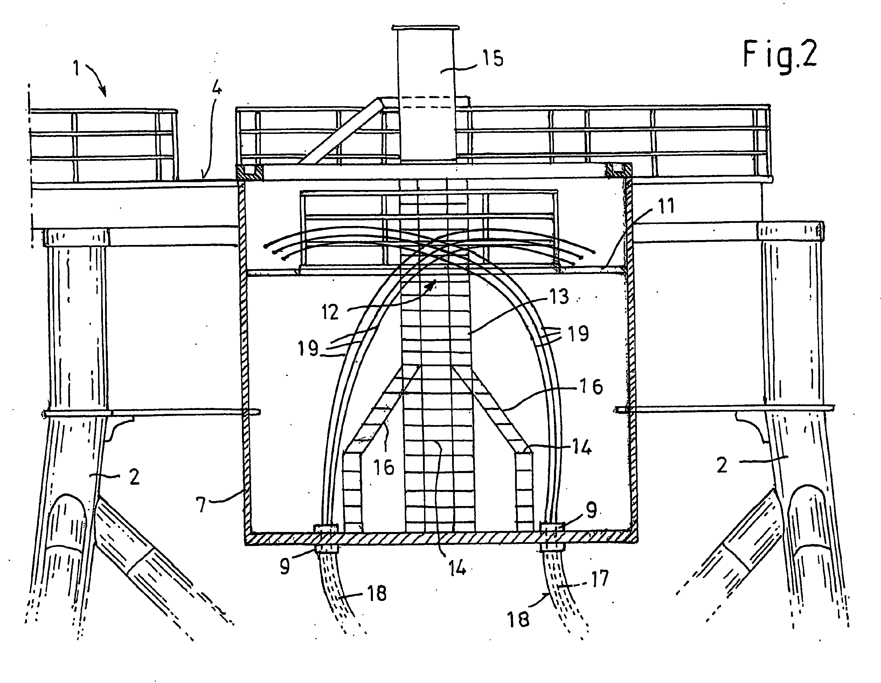

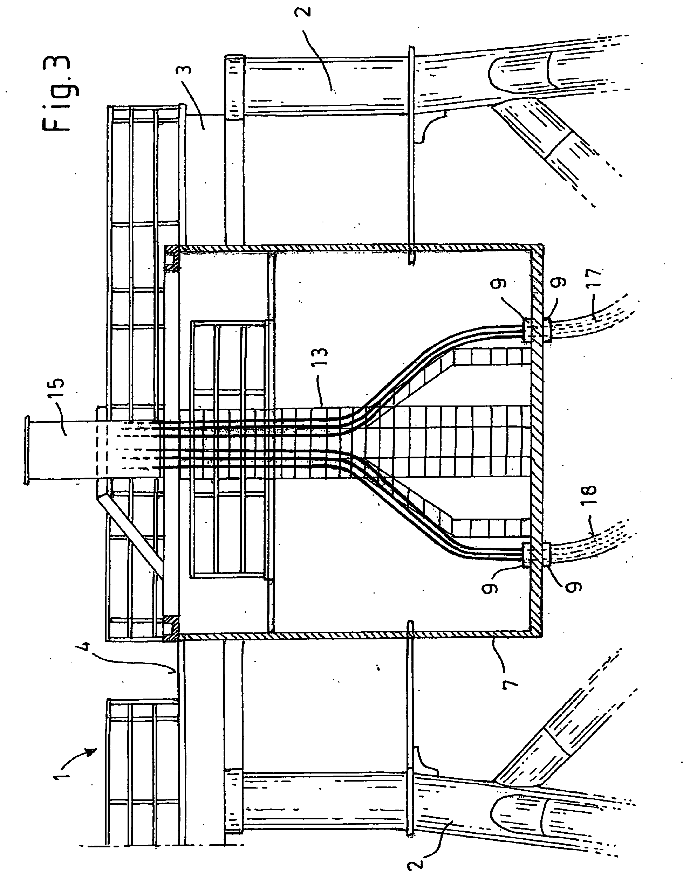

Fig. 2 zeigt den entmantelten Zustand der Seekabel 17, diese umfassen jeweils drei stromführende isolierte Adern 19. Die einzelnen Adern 19 werden sodann (siehe Fig. 3) über die Kabelbrücken 16 über das sich etwa mittig aufwärts erstreckende Gerüst der Leiterbaumstruktur 13 durch die Durchführung 12 in den Schaltschrank 15 verlegt. Dabei werden die einzelnen Adern 19 an den Montagetraversen 14 fixiert.

Wie dies insbesondere der Fig. 2 zu entnehmen ist, sind der Installationstank 7 und die Anordnung der Arbeitsbühne 11 so bemessen und gewählt, dass die einzelnen Adern 19 unter Einhaltung des zulässigen Biegeradius innerhalb des Installationstanks 7 verlegt und fixiert werden können.

### Bezugszeichenliste

- 1: Offshore-Plattform-Konstruktion
- 2: Gründungspfähle
- 3: Übergangsstück
- 4: Arbeitsplattform
- 5: Ringflansch
- 6: Geländer
- 7: Installationstank
- 8: Rost
- 9: Kabeleinführungen
- 10: Boden des Installationstanks
- 11: Arbeitsbühne des Installationstanks
- 12: Durchführung
- 13: Leiterbaumstruktur
- 14: Montagetraversen
- 15: Schaltschrank
- 16: Kabelbrücken
- 17: Seekabel
- 18: J-Rohre
- 19: Adern

## Patentansprüche

1. Offshore-Plattform-Konstruktion (1), insbesondere für eine Windkraftanlage, mit wenigstens einer Gründungsstruktur, mit wenigstens einem von der Gründungsstruktur aufgenommenen Übergangsstück (3), welches eine Plattform definiert und vorzugsweise eine Anschlussstruktur für ein auf der Plattform zu errichtendes Bauwerk aufweist, **dadurch gekennzeichnet, dass** das Übergangsstück (3) einen wenigstens vorzugsweise begehbaren Installationstank (7) umfasst, der sich in Einbaulage unterhalb der Plattform erstreckt und in welchem Mittel zum Durchführen und Abhängen von Seekabeln (17) vorgesehen sind.

2. Offshore-Plattform-Konstruktion nach Anspruch 1, **dadurch gekennzeichnet, dass** der Installationstank (7) bodenseitig wenigstens eine Kabeleinführung (9) aufweist.

3. Offshore-Plattform-Konstruktion nach Anspruch 2, **dadurch gekennzeichnet, dass** wenigstens eine Kabeleinführung außermittig des Installationstanks (7) vorgesehen ist.

4. Offshore-Plattform-Konstruktion nach Anspruch 2 oder 3, **dadurch gekennzeichnet, dass** die Kabeleinführung (9) wenigstens an ein sich unterhalb des Installationstanks (7) erstreckendes vorzugsweise als J-Rohr (18) ausgebildetes Rohr angeschlossen ist.

5. Offshore-Plattform-Konstruktion nach einem der Ansprüche 1-4, **dadurch gekennzeichnet, dass** als Mittel zur Abhängung von Seekabeln (17) wenigstens ein Kabelklemmsitz in wenigstens einer Kabeleinführung (9) vorgesehen ist.

6. Offshore-Plattform-Konstruktion nach einem der Ansprüche 1-5, **dadurch gekennzeichnet, dass** der Installationstank (7) wenigstens eine vorzugsweise begehbare Arbeitsbühne (11) umfasst.

7. Offshore-Plattform-Konstruktion nach einem der Ansprüche 1-6, **dadurch gekennzeichnet, dass** innerhalb des Installationstanks (7) wenigstens eine Kabelführung, vorzugsweise in Form einer Leiterbaum-Konstruktion (13) zur Fixierung von vereinzelten isolierten Stromkabeln vorgesehen ist, die sich vorzugsweise über die gesamte lichte Höhe des Installationstanks (7) erstreckt.

8. Offshore-Plattform-Konstruktion nach Anspruch 7, **dadurch gekennzeichnet, dass** die Leiterbaum-Konstruktion (16) als Gerüst mit einer Vielzahl von Montagetraversen (14) ausgebildet ist.

9. Offshore-Plattform-Konstruktion nach einem der Ansprüche 7 oder 8, **dadurch gekennzeichnet, dass** die Leiterbaum-Konstruktion (13) wenigstens einen sich über wesentliche Teile der Höhe des Installationstanks (7) erstreckenden Kabeltunnel als Kabelführung bildet.

10. Offshore-Plattform-Konstruktion nach einem der Ansprüche 7 oder 9, **dadurch gekennzeichnet, dass** die Leiterbaum-Konstruktion (13) wenigstens eine Kabelbrücke (16) umfasst, die sich bodenseitig von einer Kabeleinführung (9) zu einer etwa mittigen Kabelführung erstreckt.

11. Offshore-Plattform-Konstruktion nach einem der Ansprüche 1-10, **gekennzeichnet durch** wenigstens eine Schaltanlage, die oberhalb des Installationstanks (7) angeordnet ist.
